# EUROPEAN PATENT APPLICATION

(11) **EP 2 942 636 A1**
(43) Date of publication of application: **11.11.2015**
(21) Application number: 14275111.4
(22) Date of filing: 08.05.2014
(51) Int. Cl.: G01S 3/784

(54) **Method and apparatus for detecting light**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A method of detecting light is provided. The method includes the step of providing an integrating container and arranging at least two sensors of a first type such that the sensors receive light from the interior of the integrating container.

## Description

### FIELD OF THE INVENTION

The present invention concerns improvements in and relating to methods of detecting light. More particularly, the present invention concerns an improved method of detecting light, an improved electro-optic detector and an improved detector system.

### BACKGROUND ART

A wide range of applications, including for example SAL (Semi Active Laser) and LADAR (LAser Detection And Ranging) systems involve the detection of light, in particular reflected laser light. In general, it is advantageous to be able to detect the presence of very low levels of light.

Electro-optic detectors convert a light signal into an electrical signal. Generally, in order to increase efficacy (i.e. to increase the sensitivity of the detector to light), a large detector area is desirable. When used with pulsed lasers (which may typically in these applications have pulse durations in the nanosecond range) a high bandwidth, in the hundreds of MHz, is required. These two requirements (large area and high bandwidth) are often incompatible for many common designs of detector.

In order to overcome the above limitations, multiple individual detectors have been used to form a detector array in order to provide a large area. Such detector-arrays also assist in preserving high bandwidth. However, detector arrays typically suffer from large areas of dead space between the detectors. Such arrays may also require precision alignment between individual detectors and with other optical components, such as collection optics. The need to accurately align the detectors may increase the cost and complexity of the manufacturing process and may reduce the reliability of the resulting detector-array. Large detector-arrays may also occupy a large area and be difficult to reconfigure to take into account the shape and configuration of any compartment into which they are to be fitted.

### DISCLOSURE OF THE INVENTION

It is desirable to provide a method of detecting light which reduces or mitigates at least some of the above-mentioned problems.

According to a first aspect of the invention, there is provided a method of detecting light, the method comprising the step of providing an integrating container and arranging at least two sensors of a first type such that the sensors receive light from the interior of the integrating container.

Arranging multiple sensors to receive light from the interior of an integrating container maintains the detector area as compared to a detector-array but reduces the degree of precision required in the alignment of the sensors relative to each other, and to other optical components, as the integrating container removes the spatial coherence of the incoming light. This can increase the reliability and reduce the cost of detectors. Combining the sensors with an integrating container may also reduce the irradiance incident on the sensors, allowing more intense laser-beam characteristics to be measured.

A sensor may be defined as any device that is capable of converting an optical signal into an electronic signal.

An integrating container may include an integrating cavity defined by an interior surface. The integrating container may include an entrance-aperture arranged and configured to allow light to enter the integrating cavity. The integrating container may include one or more sensor-apertures via which light may be transmitted to a sensor. The integrating container may be arranged and configured such that light entering the cavity is reflected multiple times from the interior surface. In this way, it may be that light rays incident on any point on the interior surface are distributed equally to all other points on the interior of the surface. Thus, the integrating container may function in a similar manner to an integrating sphere.

The luminance of the interior surface of the integrating container may be substantially independent of the angle of observation. The interior surface may include a diffuse coating. The interior surface may be a Lambertian surface. The interior surface may be highly reflective. It may be that the interior surface does not provide specular reflection. Thus, it may be that the main loss mechanisms within the integrating cavity are either absorption by a sensor's surface, or the escape of light through the entrance-aperture.

Each sensor may be arranged such that it receives light reflected from the interior surface of the container.

A sensor may be located at least partially inside the integrating container. A sensor may include a sensing surface via which the presence of light is detected. The sensing surface may be located inside the container, for example the sensing surface may form part of the interior surface of the container.

A sensor may be located wholly outside the integrating container. When the sensor is located outside the integrating container the sensor may receive light from the interior of the container via a sensor-aperture. The sensor may be located at a position spaced apart from the integrating container. The sensor may be located adjacent to a sensor-aperture formed in the integrating container.

Each sensor may be of a given type. The type of a sensor may be defined by reference to the wavelength of the light to which it responds. Thus, different types of sensors may respond to different wavelengths of light. It will be understood that the type of a sensor may be defined by reference to other qualities apart from the wavelength of the light to which it responds. For example, different types of sensor may be capable of responding to different intensities of light. Thus, a detector may include different groups of sensors for responding to low and high levels of light. The type of a sensor may be defined with reference to the material from which it is made.

The method may include the step of combining the signal from each of the sensors of the first type to produce a first output.

Combining the signal from each of the sensors of the same type to produce a single output allows the method to reproduce the behaviour of the prior art detector arrays. This may assist in the integration of the present system into existing systems. Methods for combining the signal from a plurality of sensors are well known to the person skilled in the art and will not be discussed further here.

The method may include a step of arranging at least two sensors of a second, different, type to receive light from the interior of the integrating container. Thus, the present method may allow the detection of two or more types of light by a single device simultaneously. For example, the present method may allow the detection of two or more types of radiation, or two or more intensities of light by a single device simultaneously. A single device capable of detecting two or more types of light simultaneously may be referred to as a multi-detector. Combining sensors of different types in a single detector may allow collection optics to be shared thereby reducing the complexity and cost of such a multi-detector. The method may include a step of arranging at least two sensors of each of one or more further, different, types to receive light from the interior of the integrating container.

A number of sensors of the same type may be referred to as a group of sensors. Where the method involves two or more groups of sensors, the signals from the members of each group may be combined into a single output for that group. For example where there are two groups of sensors the signals from the sensors of the first group may be combined into a first output and the signals from the sensors of the second group may be combined into a second output. The signals from the sensors of each further group of sensors may be combined into a further output for each group. Thus, the method may permit the reproduction of the behaviour of two or more detector-arrays by a single device.

The method may be a method of detecting infra-red light. That is to say the method may be a method of detecting light having a wavelength in the range 700nm to 1 mm, for example in the near infrared (700 nm to 1.4 µm), short wavelength infrared (1.4 µm to 3 µm) or mid-wavelength infrared (3 µm to 5 µm).

It may be that the light to be detected is reflected laser light. The method may include the step of illuminating an object with a laser beam.

The method may include the step of providing a plurality of integrating containers. Each integrating container may have at least two sensors of a first type arranged to receive light from the interior of the integrating container. The method may include the step of assembling the plurality of integrating containers into an array.

The method may include the step of identifying the direction of a light source, for example an object emitting or reflecting light, by comparing the intensity of light received by each of the integrating containers in an array. For example, in a two-by-two array, if the sensors receiving light from the top-right integrating container measure a higher intensity of light that the other sensors in the array then this may indicate that the light source is located above and to the right of the array.

The method may include a step of providing a concentrator arranged and configured to provide light to the integrating container. A concentrator may be defined as an optical device which concentrates incident radiation onto a receiver. The method may include a step of providing a plurality of concentrators, wherein each concentrator is arranged and configured to provide light to a different detector in an array.

The method may include a step of providing a concentrator arranged and configured to concentrate light from the interior of the integration container onto a sensor. Thus one or more of the sensors may receive light from the interior of the integrating container via a concentrator. Including a concentrator between the interior of the integrating container and the sensor may increase the ability of a detector having a given number of sensors to detect low-level light. Including a concentrator between the interior of the integrating container may reduce the number of sensors required to detect a given level of light.

The method may include a step of alerting a user when a given level of light is detected by the detector.

According to a second aspect of the invention there is provided an electro-optic detector comprising an integrating container, a first sensor of a first type arranged and configured to receive light reflected from an interior surface of the container; and a second sensor of the first type arranged and configured to receive light reflected from an interior surface of the container.

It may be that the integrating container includes a third, a fourth and/or further sensors of the first type. Thus, the integrating container may include a plurality of sensors of the first type.

It may be that the integrating container is non-spherical. It may be that the integrating container is a polyhedron, for example a cube. Varying the geometry of the integrating container may allow the detector to be used in applications where space is limited. The integrating container may have a principal dimension which is less than 25 mm.

It may be that the integrating container includes a sensor of a second, different, type. It may be that the integrating container includes a second sensor of the second type. It may be that the integrating container includes a third, a fourth and/or further sensors of the second type. Thus, the integrating container may include a plurality of sensors of the second type.

It may be that the integrating container includes sensors of a third, fourth, fifth or further, different, types. Thus the integrating container may comprise a plurality of sensors of a plurality of different types. The integrating container may include at least two sensors of each type.

The detector may be suitable for use as a SAL (Semi-Active Laser) detector. The detector may be suitable for use as a LADAR (Laser Detection and Ranging detector). The detector may be suitable for use as a combined SAL detector and LADAR detector.

A type of sensor may be a sensor capable of detecting light with a wavelength of 1064nm. A type of sensor may be a sensor capable of detecting light with a wavelength of 1550nm. A type of sensor may be a sensor capable of detecting light with a wavelength in the range 800nm to 900nm.

The sensors may be InGaAs, PbSe, HgCdTe, InSb or other sensors.

It may be that the detector includes a light pipe arranged and configured to provide light to a sensor from the inner surface of the container, for example to a sensor spaced apart from the integrating container. Provision of a light pipe may therefore increase the configurability of the detector and thereby allow the detector to be used in a wider range of applications, particularly in applications in which space is limited. A light pipe may be defined as a structure arranged and configured to transport light from one location to another with minimal losses. A light pipe may be a hollow structure that contains light within a reflective lining. The light-pipe may include an internal reflective coating. It may be that the internal coating has a reflectivity of greater than 98% at an infrared wavelength of interest. It may be that the internal coating is a silver coating. A light pipe may be a solid that contains the light by total internal reflection. For example, a light pipe may be an optical fibre. It may be that the detector includes control circuitry arranged and configured to combine the signals received from sensors of the first type into a first output. The control circuitry may be arranged and configured to combine the signals received from each sensor in a group into a single group output. Thus, the plurality of sensors may be used to simulate a large detector array.

It may be that the detector includes a concentrator arranged and configured to provide light to a sensor from the interior surface of the container. A concentrator may be defined as an optical device which concentrates incident radiation onto a receiver. It may be that the detector includes a plurality of concentrators each concentrator being arranged and configured to provide light to a different sensor from the interior surface of the integrating container. The concentrator may have an entrance aperture located adjacent to a sensor-aperture formed in the integrating container. The concentrator may be spaced apart from the integrating container. The detector may include one or more light pipes to transport light from the interior of the integrating container to the concentrator and/or from the concentrator to the sensor.

Concentrators used in the present invention may be reflective and/or refractive concentrators. Concentrators used in the present invention may be 'imaging' concentrators or 'non-imaging' concentrators. For example, the concentrator may comprise a parabolic mirror, heliostat, Fresnel lens, compound parabolic concentrator, or other concentrator known to the skilled man.

It may be that the detector is suitable for use on an aircraft or other aerial vehicle for example a UAV (Unmanned Air Vehicle).

The detector may be arranged and configured to receive light from a concentrator. The detector may be located at an exit aperture of the concentrator. The detector may be located such that the aperture of the integrating container receives light from the exit aperture of the concentrator. It may be that the detector receives light from the concentrator via a light pipe. The aperture of the integrating container may be located at the exit aperture of the concentrator. Using a concentrator with a detector of the present invention avoids the need to shape the exit-aperture of the concentrator to correspond to a given shape of detector. Instead the entrance-aperture of the integrating container may be shaped to correspond to the exit-aperture of the concentrator which may improve the performance of the concentrator.

According to a third aspect of the invention there is provided a detector system comprising a plurality of detectors in accordance with the second aspect.

Providing a plurality of detectors may allow the direction from which light is being transmitted to be identified.

It may be that the detector system comprises a plurality of concentrators and each detector is arranged and configured to receive light from a different concentrator. For example, each integrating container may be located at the exit aperture of a different concentrator.

The field of view of a detector system may be divided into four quadrants; top-left, top-right, bottom-left and bottom-right. It will be understood that such a division may be a notional (i.e. theoretical), rather than physical division. It may be that the detector system comprises four detectors and four concentrators, each detector being arranged and configured to receive light from a different concentrator. It may be that each concentrator of the detector system is arranged and configured to receive light from a different quadrant. The direction from which light is being received may be determined by measuring which quadrant has the highest light intensity. It may be that the four concentrators are arranged in a two-by-two array (i.e. two collectors on the top row, two collectors on the bottom row). It may be that the four concentrators are arranged immediately adjacent to one-another such that light cannot pass between the concentrators. Such a four-quadrant arrangement may be particularly efficacious in determining the direction from which light is being transmitted.

Any features described with reference to one aspect of the invention are equally applicable to any other aspect of the invention, and vice versa.

### BRIEF DESCRIPTION OF THE DRAWINGS

Example embodiments of the invention will now be described by way of example only and with reference to the accompanying drawings, of which:
FIG. 1 is a schematic plan view of a detector in accordance with a first example embodiment.
FIG. 2 is a schematic (a) plan view and (b) side view of a detector system in accordance with the first example embodiment.
FIG. 3 is a schematic view of a detector in accordance with a second example embodiment.
FIG. 4 is a schematic plan view of a detector in accordance with a third example embodiment.

### DETAILED DESCRIPTION

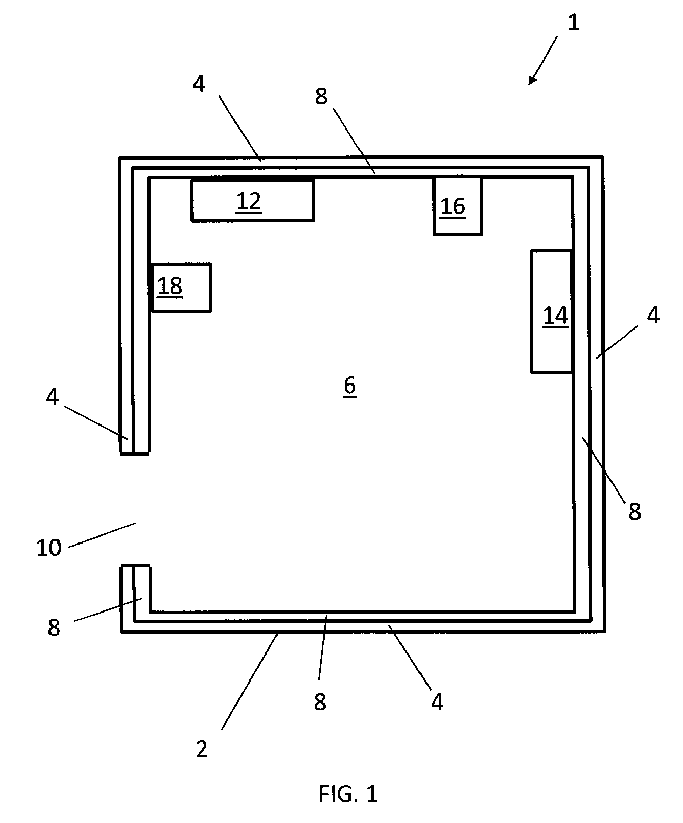

FIG. 1 shows a schematic view of a detector in accordance with an embodiment of the present invention. The detector 1 comprises an integrating container 2 which appears rectangular when shown in plan in FIG. 1. The container comprises six walls 4 (of which only four are shown FIG. 1), the inner surfaces of which define a cavity 6. The inner surfaces of the walls 4 are covered with a reflective layer 8. The container 2 has an aperture 10 in one wall 4. Four sensors 12, 14, 16, 18 are located within the cavity 6, at the inner surface of the wall 4. Two of the sensors 12, 14 are 1064nm-sensors, configured to sense light at a wavelength of 1064 nm. The other two sensors 16, 18 are 1550nm-sensors, configured to sense light at a wavelength of 1550 nm. The detector 1 also includes control circuitry (not shown) which combines the signals from the 1064nm-sensors 12, 14 to produce a 1064nm-output and combines the signals from the 1550nm-sensors 16, 18 to produce a 1550nm-output.

In use, a laser (not shown) producing infra-red light at a wavelength of 1064nm is used to illuminate an object (not shown). The laser light is reflected from the surface of the object. A portion of the reflected light enters the container 2 via the aperture 10 and is reflected (and refracted) by the reflective layer 8 until it arrives at the surface of one of the sensors 12, 14, 16, 18. A portion of the light reflected by the reflective layer 8 escapes the integrating container 2 via the aperture 10. The four sensors 12, 14, 16, 18 are located within the container 2 such that light entering the container 2 via the aperture 10 must be reflected before it can reach any of the sensors 12, 14, 16, 18. While the detector 1 is in use the signals from the two 1064nm-sensors 12, 14 are combined by control circuitry (not shown) to produce a 1064nm-output and the signals from the two 1550nm-sensors 16, 18 are combined to produce a 1550nm-output. When reflected laser light arrives at the surface of a 1064nm-sensor 12, 14, the signal produced by that sensor changes. The change in the signal produced by the 1064nm-sensor results in a change in the 1064nm-output. When the level of the 1064nm-output exceeds a threshold value, a signal is sent to a user to indicate that light at a wavelength of 1064nm has been detected.

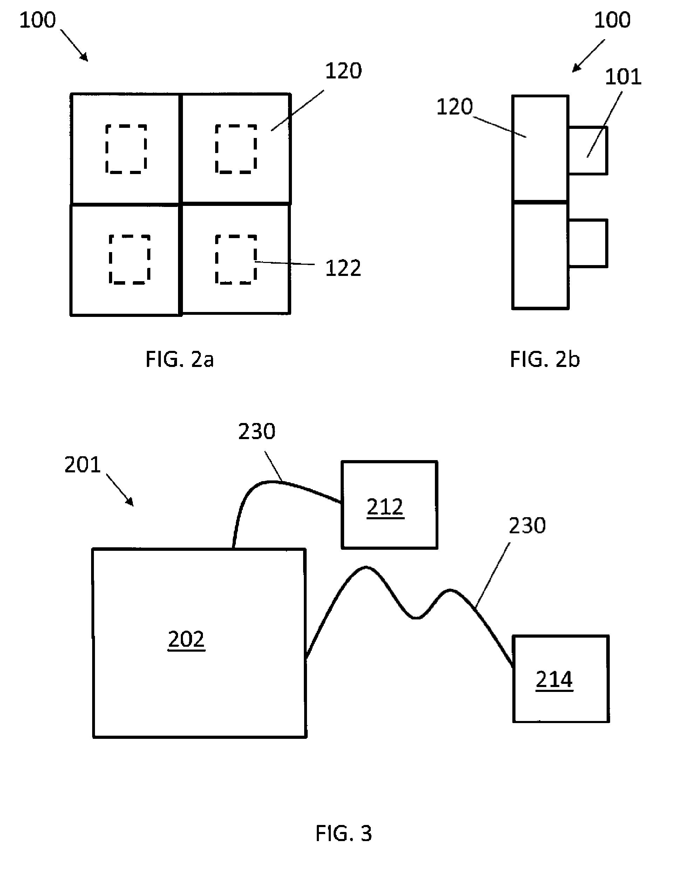

FIG. 2a and 2b show front and side schematic views of a detector system 100 in accordance with the second aspect of the invention. The system 100 includes four detectors 101 and four collector devices 120. The detectors 101 are substantially as described with reference to FIG. 1. The four collector devices 120 are arranged in a two-by-two array (i.e. two collectors on the top row, two collectors on the bottom row). Each collector has an exit aperture, the edge of which is defined by the dashed line labelled 122 in FIG. 2a. A detector 101 is located at each exit aperture such that light from the collector 120 enters the detector 101.

Each collector 120 receives light from a different quadrant of the detector. In use, which of the detector 101/ collector 120 pairs gives the strongest light reading will provide an indication of the direction of the light source e.g. an object reflecting light.

It will be understood by the skilled man that pulse stretching, due to different optical path lengths travelled within the integrating container may be an important consideration. Ray-tracing shows, for 99% diffuse reflectivity, that the mean number of ray-interactions within an integrating sphere interior surface is thirty. The mean path-length within an integrating sphere is 70% of the sphere diameter. For a 14mm diameter sphere, the mean path-length is approximately 300mm (i.e., 14mm x 70% x 30) which corresponds to a mean delay of 1ns. Hence, the path-length statistical spread (such as the standard-deviation) may be less than 1 ns, which is acceptable for an active electro-optics application.

FIG. 3 shows a schematic view of a detector in accordance with a second embodiment of the present invention. The following description will concentrate on those aspects of the detector which differ from the detector of the first embodiment. The detector 201 comprises an integrating container 202 and two sensors 212, 214 spaced apart from the integrating container 202. A light pipe 230 extends between the integrating container 202 and each of the sensors 212, 214. In use, the light pipes 230, transmit light from inside the integrating container 202 to each of the sensors 212, 214.

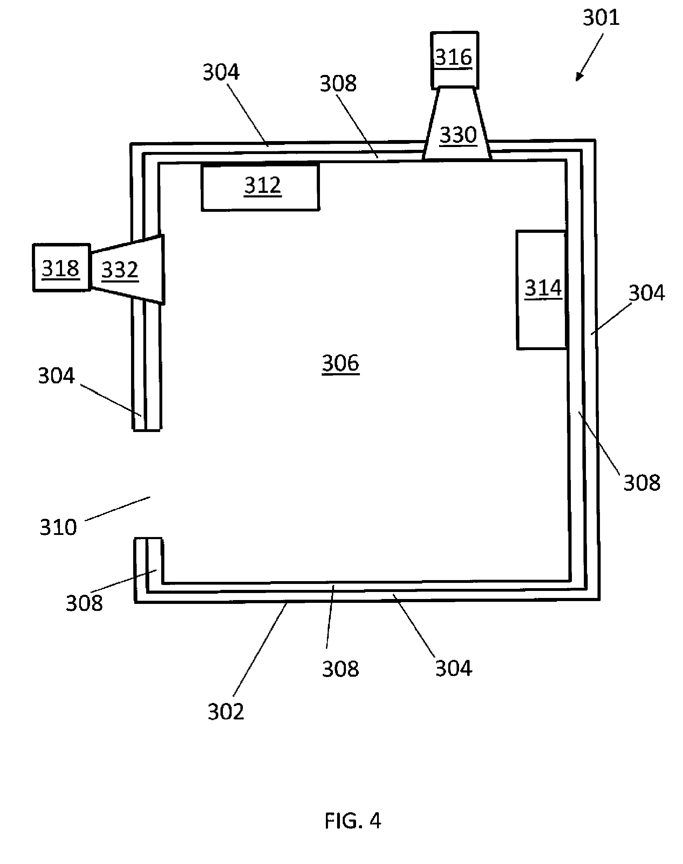

FIG. 4 shows a schematic view of a detector in accordance with a second embodiment of the present invention. The following description will concentrate on those aspects of the detector which differ from the detector of the first embodiment. The detector 301 includes two concentrators 330, 332. The inlet of each concentrator 330, 332 is flush with the surface of the reflective layer 308. A 1550nm-sensor 316, 318 is located at the exit aperture of each concentrator 330, 332. In use, reflected laser light from the interior of the cavity 302 reaches each of the 1550nm-sensors 316, 318 via a concentrator 330, 332.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of detecting light, the method comprising the step of providing an integrating container and arranging at least two sensors of a first type such that the sensors receive light from the interior of the integrating container.

2. A method according to claim 1 wherein the method further includes the step of combining the signals from each of the sensors to produce a first output.

3. A method according to any preceding claim, wherein the method includes the steps of arranging at least two sensors of a second, different, type such that the sensors of the second type receive light from the interior of the integrating container and combining the signals from each of the sensors of the second type to produce a second output.

4. A method according to any preceding claim, wherein the method includes the step of providing a plurality of integrating containers, wherein for each integrating container at least two sensors of a first type are arranged to receive light from the interior of the integrating container.

5. An electro-optic detector comprising an integrating container and
a first sensor of a first type arranged and configured to receive light reflected from an interior surface of the container; and
a second sensor of the first type arranged and configured to receive light reflected from an interior surface of the container.

6. A detector according to claim 5, wherein the integrating container is non-spherical.

7. A detector according to claim 5 or claim 6, wherein the detector further includes a first sensor of a second, different, type arranged and configured to receive light reflected from an interior surface of the container.

8. A detector according to any of claims 5 to 7, wherein the detector further includes a second sensor of the second type arranged and configured to receive light reflected from an interior surface of the container.

9. A detector according to any of claims 5 to 8 wherein the first type of sensor responds to light with a wavelength of 1064 nm, and wherein the first type of sensor responds to light with a wavelength of 1550 nm.

10. A detector according to any of claims 5 to 9, wherein the detector further includes a light pipe arranged and configured to provide light to a sensor from the interior surface of the container.

11. A detector according to any of claims 5 to 10, wherein the detector further includes a concentrator arranged and configured to provide light to a sensor from the interior surface of the container.

12. A detector according to any of claims 5 to 11, wherein the detector further includes control circuitry arranged and configured to combine the signals received from each of the sensors of the first type into a single output.

13. A detector system comprising a plurality of detectors in accordance with any of claims 5 to 12.

14. A detector system according to claim 13, wherein the detector system comprises a plurality of concentrators and each detector is arranged and configured to receive light from a different concentrator.

15. A detector system according to claim 14 wherein the field of vision of the detector system comprises four notional quadrants and the detector system comprises four detectors and four concentrators, and wherein each concentrator is arranged and configured to receive light from a different one of the four quadrants.
